(19) Europäisches Patentamt
European Patent Office
Office européen des brevets

(11) EP 0 554 922 B1

(12) **FASCICULE DE BREVET EUROPEEN**

(45) Date de publication et mention de la délivrance du brevet: **26.03.1997 Bulletin 1997/13**

(51) Int. Cl.$^6$: **C01B 39/00**

(21) Numéro de dépôt: **93107198.9**

(22) Date de dépôt: **10.10.1989**

# (54) Zéolithe consistant en un aluminosilicate polytype hexagonal de la faujasite

Aluminosilikatzeolith bestehend aus einem hexagonalen Polytyp des Faujasits

Aluminosilicate zeolite consisting of a hexagonal polytype of faujasite

(84) Etats contractants désignés: **CH DE ES FR GB IT LI NL SE**

(30) Priorité: **10.10.1988 FR 8813269**

(43) Date de publication de la demande: **11.08.1993 Bulletin 1993/32**

(62) Numéro(s) de document de la (des) demande(s) initiale(s) en application de l'article 76 CBE: **89402788.7 / 0 364 352**

(73) Titulaire: **ELF AQUITAINE**
**92400 Courbevoie (FR)**

(72) Inventeurs:
- **Delprato, François**
  **F-68400 Riedisheim (FR)**
- **Guth, Jean-Louis**
  **F-68200 Brunstatt (FR)**
- **Anglerot, Didier**
  **F-64000 Pau (FR)**
- **Zivkov, Catherine**
  **F-40180 Narosse (FR)**

(74) Mandataire: **Boillot, Marc**
**Elf Aquitaine Production,**
**Département Propriété Industrielle,**
**Tour Elf,**
**Cédex 45**
**92078 Paris La Défense (FR)**

(56) Documents cités:
**EP-A- 0 315 461**
**US-A- 3 415 736**
**US-A- 3 972 983**
**US-A- 4 333 859**
- **ZEOLITES FOR THE NINETIES, 8 IZC, juillet 1989, Amsterdam (NL); J.C. JANSEN et al., pp. 127-128**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 554 922 B1

Printed by Rank Xerox (UK) Business Services
2.13.17/3.4

## Description

L'invention a trait à une zéolithe consistant en un aluminosilicate polytype hexagonal de la faujasite.

Les zéolithes sont des tectosilicates cristallisés. Les structures sont constituées par des assemblages de tétraèdres $TO_4$ formant une charpente tridimensionnelle par la mise en commun des atomes d'oxygène. Dans les zéolithes du type aluminosilicate qui sont les plus communes, T représente le silicium tétravalent ainsi que l'aluminium trivalent. La charpente tridimensionnelle précitée présente des cavités et canaux qui possèdent des dimensions moléculaires et accueillent les cations compensant le déficit de charge lié à la présence de l'aluminium trivalent dans les tétraèdres $TO_4$, lesdits cations étant généralement échangeables.

D'une manière générale, la composition des zéolithes peut être représentée par la formule brute ($M_{2}/_{n}O$; $Y_2O_3$ ; x $ZO_2$) à l'état déshydraté et calciné. Dans cette formule Z et Y désignent respectivement les éléments tétravalents et trivalents des tétraèdres $TO_4$, M représente un élément électropositif de valence n tel qu'un métal alcalin ou alcalino-terreux et constitue le cation de compensation, et x est un nombre pouvant varier de 2 à théoriquement l'infini auquel cas la zéolithe est une silice.

Chaque type de zéolithe possède une structure microporeuse distincte. La variation des dimensions et formes des micropores d'un type à l'autre, entraîne des changements dans les propriétés adsorbantes. Seules les molécules ayant certaines dimensions et formes sont capables d'entrer dans les pores d'une zéolithe particulière.
En raison de ces caractéristiques remarquables les zéolithes conviennent tout particulièrement pour la purification ou la séparation de mélanges gazeux ou liquides comme, par exemple, la séparation d'hydrocarbures par adsorption sélective.

La composition chimique avec en particulier la nature des éléments présents dans les tétraèdres $TO_4$ et la nature des cations de compensation échangeables, est également un facteur important intervenant dans la sélectivité de l'adsorption et surtout dans les propriétés catalytiques de ces produits. Ils sont utilisés comme catalyseurs ou supports de catalyseurs dans le craquage, le reformage et la modification d'hydrocarbures ainsi que dans l'élaboration de nombreuses molécules.

De nombreuses zéolithes existent dans la nature, ce sont des aluminosilicates dont les disponibilités et propriétés ne répondent pas toujours aux exigences des applications industrielles. De ce fait, la recherche de produits ayant des propriétés nouvelles a conduit à la synthèse d'une grande variété de zéolithes essentiellement du type aluminosilicate. Parmi les nombreux exemples de ce type on peut signaler la zéolithe A (US-A-2882243), la zéolithe X (US-A-2882244), la zéolithe Y (US-A-3130007), la zéolithe L (FR-A-1224154), la zéolithe T (FR-A-1223775), la zéolithe ZSM5(US-A-3702886),la zéolithe ZSM 12(US-A-3832449) et la zéolithe ZSM 48(EP-A-0015132).

Les zéolithes de la famille structurale de la faujasite sont caractérisées par une structure de charpente tridimensionnelle qui peut être décrite à partir de l'assemblage de modules appelés cube-octaèdres. Chacun de ces modules est constitué de 24 tétraèdres contenant les éléments Si et Al et pontés par l'oxygène selon le principe décrit plus haut. Dans le cube-octaèdre les tétraèdres sont liés de manière à former huit cycles à six tétraèdres et six cycles à quatre tétraèdres. Chaque cube-octaèdre est relié en coordinance tétraédrique, à travers quatre cycles à six tétraèdres, à quatre cube-octa èdres voisins.

Il est commode, pour montrer les relations qui unissent les différents membres de la famille structurale, de considérer des plans structuraux dans lesquels les cube-octaèdres sont disposés aux sommets d'un réseau plan d'hexagones. Chaque cube-octaèdre est ainsi relié à trois voisins dans le plan structural.

La quatrième direction de liaison est dirigée alternativement de part et d'autre du plan structural et permet de relier les cube-octaèdres entre plans structuraux voisins et parallèles.

Selon les dispositions relatives de ces plans structuraux les uns par rapport aux autres, on peut obtenir

- des séquences de trois plans structuraux distincts ABCABC... correspondant à une structure de symétrie cubique,
- des séquences de deux plans structuraux distincts ABAB.... correspondant à une structure de symétrie hexagonale,
- des séquences plus complexes qui peuvent être régulières ou irrégulières.

Tous les solides appartenant à la famille structurale de la faujasite sont des polytypes et possèdent des canaux inter-connectés d'environ 0,8nm de diamètre. Ainsi la faujasite est une zéolithe naturelle dont la structure correspond à l'empilement de trois plans structuraux distincts ABC correspondant à une structure de symétrie cubique. On peut obtenir, par synthèse à partir d'un gel d'aluminosilicate de sodium, des composés de même structure que la faujasite, lesdits composés étant appelés zéolithes X lorsque le rapport Si : Al du nombre d'atomes de silicium au nombre d'atomes d'aluminium est compris entre 1 et 1,5 et zéolithes Y lorsque ledit rapport Si:Al est compris entre 1,5 et 3. Des rapports Si:Al supérieurs à 3 ne peuvent pas être obtenus par synthèse.
Néanmoins il existe des traitements post-synthèse permettant d'élever la valeur du rapport Si:Al au delà de 3, par exemple traitement à la vapeur d'eau à haute température après avoir échangé les cations $Na^+$ contre des protons ou des cations lanthane. On peut ainsi améliorer certaines propriétés telles que la stabilité hydrothermale nécessaire dans

certaines applications comme, par exemple, le craquage des molécules d'hydrocarbures en raffinage du pétrole.

On peut également obtenir par synthèse des composés dont la structure se rapproche de la structure hexagonale ABABAB... mais avec des défauts d'empilement, qui se traduisent par l'élargissement de certaines raies des diagrammes de diffraction des rayons X utilisés pour identifier ces composés. Ainsi la zéolithe ZSM-3 (US-A-3415736) est préparée dans un milieu contenant les cations $Na^+$ et $Li^+$, son rapport Si:Al est proche de 1,5. En utilisant le couple de cations $Cs^+$ et $Na^+$, on obtient la zéolithe CSZ-3 (US-A-4,333,859) dont le rapport Si:Al est proche de 3. Les zéolithes du type ZSM 20 (US-A-3972983) cristallisent en présence de cations tétraéthylammonium ($TEA^+$) associés aux cations $Na^+$.

L'invention concerne une zéolithe consistant en un aluminosilicate polytype hexagonal de la faujasite, ladite zéolithe ayant un rapport Si:Al supérieur à 1 et pouvant dépasser 3, possédant une structure de symétrie hexagonale avec des paramètres a, b et c de la maille hexagonale tels que 1,72 nm<a=b<1,77 nm et 2,80 nm<c<2,89 nm et présentant, après calcination à 600°C pendant 4 heures, un diagramme de diffraction des rayons X comparable à celui donné dans le tableau I ci-après :

TABLEAU I

| 2θ (°) | $d_{hkl}$ ($10^{-1}$nM) | (h k l) | I/Io |
|---|---|---|---|
| 5,88 | 15,03 ± 0,2 | (1 0 0) | FF |
| 6,23 | 14,2 | (0 0 2) | FF |
| 6,66 | 13,3 | (1 0 1) | F |
| 8,40 | 10,52 | (1 0 2) | f |
| 10,19 | 8,68 ± 0,08 | (1 1 0) | F |
| 11,06 | 7,99 | (1 0 3) | mF |
| 11,78 | 7,51 | (2 0 0) | mF |
| 11,95 | 7,40 | (1 1 2) | mF |
| 13,49 | 6,56 | (2 0 2) | ff |
| 15,06 | 5,88 ± 0,05 | (2 0 3) | f |
| 15,58 | 5,68 | (0 0 5) | F |
| 15,89 | 5,57 | (2 1 1) | f |
| 16,73 | 5,29 | (1 0 5) | f |
| 17,18 | 5,16 | (2 0 4) | F |
| 18,22 | 4,87 | (2 1 3) | f |
| 18,79 | 4,72 | (1 1 5) | f |
| 19,67 | 4,51 | (1 0 6) | f |
| 20,45 | 4,34 | (2 2 0) | mF |
| 22,22 | 4,00 | (3 1 2) | f |
| 22,75 | 3,91 | (1 0 7) | f |
| 23,30 | 3,82 | (3 1 3) | f |
| 23,66 | 3,76 | (3 0 5) | F |
| 24,75 | 3,59 | (3 1 4) | f |
| 25,83 | 3,45 | (2 2 5) | f |
| 26,52 | 3,36 | (2 1 5) | f |
| 27,16 | 3,28 | (4 1 0) | f |
| 28,77 | 3,103 ± 0,008 | (3 2 4) | f |
| 30,38 | 2,942 | (4 0 6) | ff |
| 30,89 | 2,894 | (3 3 0) | f |
| 31,20 | 2,866 | (5 0 3) | f |
| 31,56 | 2,834 | (3 3 2) | ff |

Dans la colonne des $d_{hkl}$ du tableau I, on a donné les valeurs moyennes des distances interréticulaires. Chacune de ces valeurs doit être affectée de l'erreur de mesure Δ ($d_{hkl}$) comprise entre ± 0,2 et ± 0,008.

On peut donner à la zéolithe selon l'invention, polytype hexagonal de la faujasite, la formule suivante, ramenée à une maille (assemblage de 96 tétraèdres) :

$$(u\ M_1^{q+})\ (r\ M^{n+})\ ((SiO_2)_{96-y}\ (AlO_2)_y)^{y-}\ (t\ H_2O) \qquad (II)$$

avec dans cette formule $M_1^{q+}$ désignant un cation q-valent d'un métal du groupe IA de la Classification Périodique des Eléments (q=1) ou d'un métal alcalino-terreux choisi parmi Ca, Sr et Ba (q=2) ou un cation monovalent renfermant de

l'azote (q=1), notamment ammonium cu ammonium quaternaire, $M^{n+}$ représentant un cation métallique de valence n autre qu'un cation $M_1^{q+}$ ,y,t,u et r étant des nombres tel que $15 \leq y \leq 48$, $t \geq O$ selon l'état d'hydratation de la zéolithe (t=O pour une zéolithe complètement anhydre), $O < u \leq \frac{y}{q}$ et $O \leq r \leq \frac{y}{n}$ avec $qu + rn \geq y$ .

Un procédé de synthèse de la zéolithe selon l'invention consiste à réaliser tout d'abord un mélange réactionnel ayant un pH supérieur à 10 et renfermant de l'eau, une source de silicium tétravalent, une source d'aluminium trivalent, une source d'ions hydroxydes sous la forme d'une base forte minérale ou organique et un agent structurant ST de manière à obtenir un gel d'aluminosilicate ayant la composition voulue pour permettre sa cristallisation en un composé de la famille structurale de la faujasite, puis à maintenir le gel obtenu, éventuellement après murissement préalable, à une température au plus égale à 150°C et sous une pression au moins égale à la pression autogène du mélange constitué par ledit gel pendant une durée suffisante pour effectuer la cristallisation de ce gel en un précurseur de la zéolithe consistant en la zéolithe emprisonnant l'agent structurant ST dans ses cavités et à soumettre ledit précurseur à une calcination pour détruire l'agent structurant et produire la zéolithe, l'agent structurant ST consistant en au moins un composé appartenant au groupe formé par les macrocycles carbonés qui renferment dans le cycle des hétéroatomes choisis parmi l'oxygène, l'azote, le silicium et le soufre et qui contiennent 18 à 24 atomes dans le cycle.

Avantageusement la quantité d'agent structurant ST présente dans le mélange réactionnel destiné à former le gel est telle que le rapport molaire $ST:Al^{III}$ aille de 0,1 à 4, ledit rapport allant de préférence de 0,1 à 1 et tout particulièrement de 0,2 à 0,5.

En particulier, les ingrédients constituant le mélange réactionnel donnant naissance au gel d'aluminosilicate sont utilisés de telle sorte que ledit gel ait, en termes de rapports molaires, la composition suivante

| | | Intervalles avantageux | Intervalles préférés |
|---|---|---|---|
| $Si^{IV}$ | $Al^{III}$ | 2 à 20 | 4 à 10 |
| $OH^-$ | $Al^{III}$ | 0,5 à 8 | 1 à 6 |
| ST | $Al^{III}$ | 0,1 à 4 | 0,1 à 1 |
| $H_2O$ | $Al^{III}$ | 40 à 200 | 50 à 150 |

Les macrocycles utilisables pour constituer l'agent structurant ST peuvent être notamment :

- des éthers couronnes, dont le cycle renferme 18 à 24 atomes et comporte uniquement des atomes d'oxygène comme hétéroatomes, parmi lesquels on peut citer les composés suivants :

  1,4,7,10,13,16-hexaoxacyclooctadécane (éther couronne "18 crown 6"),
  2,3,11,12-dibenzo 1,4,7,10,13,16-hexaoxacyclooctadécane (éther couronne "dibenzo 18 crown 6"),
  2,3,11,12-dicyclohexano 1,4,7,10,13,16-hexaoxacyclooctadécane (éther couronne "dicyclohexano 18 crown 6"),
  2,3,14,15-dibenzo 1,4,7,10,13,16,19,22-octaoxacyclotétracosane (éther couronne "dibenzo 24 crown 8"),
  2,3,14,15-dicyclohexano 1,4,7,10,13,16,19,22-octaoxacyclotétracosane (éther couronne "dicyclohexano 24 crown 8")

- des composés ayant une structure comparable à celle des éthers-couronnes ci-dessus, mais dont les atomes d'oxygène du cycle sont remplacés en partie ou en totalité par des substituants choisis parmi les atomes de soufre et les groupements >NH, >NR et

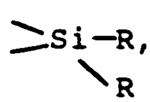

dans lesquels R est un radical hydrocarbyle en $C_1$ à $C_4$, parmi lesquels on peut citer les composés suivants :

  1,4,7,10,13,16-hexaazacyclooctadécane trisulfate (hexacyclène trisulfate),
  1,4,7,10,13,16-hexathiacyclooctadécane,
  1,7,10,16-tétraoxa 4,13-diazacyclooctadécane (Kryptofix 22),
  20-(diméthyl-1,1 sila) 1,4,7,10,13,16,19-heptaoxacycloeicosane (éther couronne "diméthyl sila 20 crown 7").

En particulier, l'agent structurant ST est choisi parmi les composés éther couronne "18 crown 6", Kryptofix 22, hexacyclène trisulfate et 1,4,7,10,13,16-hexathiacyclooctadécane.

Parmi les sources de silicium tétravalent $Si^{IV}$ utilisables dans la préparation du mélange réactionnel destiné à former le gel d'aluminosilicate, on peut citer les silices solides finement divisées sous la forme d'hydrogels, d'aérogels ou de suspensions colloidales, les silicates hydrosolubles tels que les silicates alcalins comme le silicate de sodium, les esters siliciques hydrolysables tels que les orthosilicates de tétraalcoyles de formule $Si(OR)_4$ dans laquelle R désigne un alcoyle en $C_1$ à $C_4$ tel que méthyle et éthyle. La source de silicium est mise en oeuvre sous la forme d'une solution aqueuse vraie, cas des silicates hydrosolubles, ou bien d'une suspension aqueuse qui peut être colloidale, cas des silices finement divisées.

Conviennent comme sources d'aluminium trivalent $Al^{III}$ les sels d'aluminium tels que sulfate, nitrate, chlorure, fluorure, acétate, les oxydes et hydroxyoxydes d'aluminium, les aluminates et notamment les aluminates alcalins tels que l'aluminate de sodium, les esters d'aluminium tels que les aluminium trialcoxydes de formule Al $(OR)_3$ dans laquelle R désigne un radical alcoyle en $C_1$ à $C_4$ tel que méthyle, éthyle ou propyle.

La source d'ions hydroxydes est choisie parmi les bases fortes minérales, notamment hydroxydes des métaux alcalins du groupe IA de la Classification Périodique des Eléments et hydroxydes des métaux alcalino-terreux Ca, Sr et Ba, et les bases fortes organiques, notamment hydroxydes d'ammoniums quaternaires, la préférence allant aux bases minérales et notamment à la soude NaOH.

Le mélange réactionnel destiné à former le gel d'aluminosilicate peut encore renfermer des cations $M^{n+}$ d'au moins un métal M, de valence n, autre que les métaux dont les hydroxydes sont des bases fortes, en quantité globale telle que le rapport molaire $M^{n+}$ : $Al^{III}$ soit au plus égal à 0,4 et de préférence au plus égal à 0,3. Lesdits cations $M^{n+}$ sont introduits dans ledit mélange réactionnel sous la forme de sels tels que sulfates, nitrates, chlorures ou acétates ou bien encore sous la forme d'oxydes.
Comme exemples de tels cations on peut citer notamment $Co^{++}$, $Cd^{++}$, $Mg^{++}$ et $Ag^{+}$.

Le mélange des ingrédients constituant le mélange réactionnel destiné à former le gel d'aluminosilicate peut être réalisé dans un ordre quelconque. Avantageusement on effectue ledit mélange en préparant tout d'abord, à température ambiante, une solution aqueuse basique renfermant une base forte, l'agent structurant ST et les cations $M^{n+}$ s'ils sont utilisés, puis en incorporant à cette solution une solution aqueuse de la source d'aluminium trivalent et une solution aqueuse ou une suspension, colloidale ou non, de la source de silicium tétravalent.

Le pH du mélange réactionnel, dont la valeur est supérieure à 10, est de préférence proche de 13.

Avant de procéder à la cristallisation du gel, on peut ajouter au milieu réactionnel destiné a former ledit gel, des germes de cristallisation en quantité allant avantageusement de 0,1 % à 10 % en poids du milieu réactionnel. Ces germes peuvent être produits soit par broyage d'une zéolithe de même nature que la phase cristalline à produire ou encore par synthèse à partir d'une solution de nucléation appropriée. Une solution de nucléation appropriée a par exemple la composition suivante, exprimée en oxydes :

15 $Na_2O$ ; 1 $Al_2O_3$ ; 10 $SiO_2$ ; 180 $H_2O$

En l'absence d'ajout de germes, il est avantageux de soumettre le gel d'aluminosilicate, formé à partir du mélange réactionnel, à un murissement, dans une enceinte fermée, à une température inférieure à la température de cristallisation pendant une durée pouvant aller d'environ 6 heures à environ 6 jours. Ledit murissement peut être réalisé en statique ou sous agitation.

La cristallisation du gel d'aluminosilicate, avec ou sans germe, s'effectue en chauffant le mélange réactionnel à une température au plus égale à 150°C et de préférence allant de 90°C à 120°C et sous une pression correspondant au moins à la pression autogène du mélange réactionnel formant le gel. La durée du chauffage nécessaire à la cristallisation dépend de la composition du gel et de la température de cristallisation. Elle se situe généralement entre 2 heures et quinze jours.

Les cristaux obtenus, désignés par précurseurs de la zéolithe et consistant en la zéolithe emprisonnant l'agent structurant dans ses pores et cavités, sont séparés du milieu de cristallisation par filtration, puis lavés à l'eau distillée ou désionisée jusqu'à obtenir des eaux de lavage peu basique, c'est-à-dire dont le pH est inférieur à 9. Les cristaux lavés sont ensuite séchés en étuve à une température comprise entre 50°C et 100°C et de préférence aux environs de 70°C.

La zéolithe est obtenue à partir des cristaux du précurseur en soumettant lesdits cristaux à une calcination à une température supérieure à 300°C et de préférence comprise entre 400°C et 700°C pendant une durée suffisante pour éliminer l'agent structurant contenu dans le précurseur.

Comme indiqué précédemment, les zéolithes selon l'invention consistent en aluminosilicates polytypes hexagonaux de la faujasite présentant une structure de symétrie hexagonale et possédant des rapports Si:Al supérieurs à 1 et pouvant dépasser 3.

La caractérisation des produits selon l'invention, à savoir les précurseurs issus de la cristallisation et les zéolithes proprement dites résultant de la calcination des précurseurs, peut se faire en utilisant les techniques suivantes :

.Microscopie électronique:

Au microscope électronique, les produits de structure hexagonale se présentent sous des formes compatibles avec la symétrie hexagonale (par exemple plaquettes hexagonales).

.Diagramme de diffraction des rayons X:

Ce diagramme de diffraction est obtenu au moyen d'un diffractomètre en utilisant la méthode classique des poudres avec le rayonnement K$\alpha$ du cuivre. Un étalon interne permet de déterminer précisément les valeurs des angles 2 O associés aux pics de diffraction. Les différentes distances interréticulaires $d_{hkl}$, caractéristiques de l'échantillon, sont calculées à partir de la relation de BRAGG. L'estimation de l'erreur de mesure $\Delta$ ($d_{hkl}$) sur $d_{hkl}$ se calcule, en fonction de l'erreur absolue $\Delta$ (2 $\theta$) affectée à la mesure de 2 $\theta$, par la relation de BRAGG. En présence d'un étalon interne, cette erreur est minimisée et prise couramment égale à $\pm$ 0,05°. L'intensité relative I/Io affectée à chaque valeur $d_{hkl}$ est estimée à partir de la hauteur du pic de diffraction correspondant.
On utilise une échelle de symboles pour caractériser cette intensité relative comme suit : FF = très forte, F = forte, mF = moyennement forte, m = moyenne, mf = moyennement faible f = faible, ff = très faible.

. Thermogravimétrie :

Les thermogrammes réalisés sur les échantillons de produits permettent de quantifier le nombre de molécules d'agent structurant et le nombre de molécules d'eau qui sont contenues dans une maille de la structure.

. RMN du carbone 13 :

La RMN du carbone 13 en polarisation croisée avec rotation à l'angle magique réalisée sur des échantillons du précurseur permet de confirmer la présence de l'agent structurant dans les cavités du produit.

. Détermination du rapport Si : Al :

Elle peut être réalisée en faisant appel à l'une ou l'autre des techniques suivantes :

- analyse chimique
- radiocristallographie (cf. D.W. BRECK : "Zeolite Molecular Sieves", Ed. John Wiley and Sons, New York, 1974, page 94)
- RMN du silicium 29 (cf. J. KLINOWSKI : "Progress in NMR Spectroscopy", 1984, Vol.16, pages 237 à 309).

Les précurseurs de zéolithes, qui sont produits lors de l'étape de cristallisation du procédé décrit précédemment et dont la calcination conduit aux zéolithes selon l'invention, sont des aluminosilicates cristallins ayant un rapport Si:Al supérieur à 1 et pouvant dépasser 3, possédant la structure hexagonale des polytypes hexagonaux de la faujasite et présentant un diagramme de diffraction des rayons X comparable à celui donné dans le tableau II fourni plus loin.

Ces précurseurs peuvent être représentés par une formule qui, ramenée à une maille hexagonale de la structure cristalline, s'écrit comme suit :
$(u\ M_1^{q+})\ (r\ M^{n+})\ [(SiO_2)_{96-y}\ (AlO_2)_y]^{y-}\ (j\ ST)\ (t\ H_2O)$
dans laquelle $M_1^{q+}$, $M^{n+}$, y, u, r et t ont les significations données précédemment, j est un nombre tel que $2 \leq j \leq 5$ et ST représente une molécule d'au moins un composé choisi parmi les macrocycles carbonés définis précédemment qui renferment dans le cycle des hétéroatomes choisis parmi O, N, Si et S et qui contiennent 18 à 24 atomes dans le cycle et notamment parmi ceux desdits macrocycles mentionnés explicitement à titre d'exemples.

TABLEAU II

| 2θ (degrés) | dhkl ($10^{-1}$nm) | (h k l) | I/Io |
|---|---|---|---|
| 5,88 | 15,02 ± 0,2 | (1 0 0) | FF |
| 6,24 | 14,15 | (0 0 2) | F |
| 6,65 | 13,28 | (1 0 1) | F |
| 10,12 | 8,73 ± 0,08 | (1 ) | f |
| 11,01 | 8,03 | (1 0 3) | mf |
| 11,93 | 7,41 | (1 1 2) | mF |
| 13,58 | 6,515 | (2 0 2) | ff |
| 15,57 | 5,686± 0,05 | (0 0 5) | mF |
| 15,86 | 5,580 | (2 1 1) | mf |
| 16,70 | 5,305 | (1 0 5) | mf |
| 17,15 | 5,165 | (2 0 4) | F |
| 18,16 | 4,88 | (2 1 3) | mf |
| 18,71 | 4,74 | (1 1 5) | mf |
| 19,65 | 4,509 | (1 0 6) | mF |
| 20,42 | 4,345 | (2 2 0) | F |
| 22,14 | 4,011 | (3 1 2) | mF |
| 22,71 | 3,912 | (1 0 7) | mf |
| 23,32 | 3,811 | (3 1 3) | mf |
| 23,60 | 3,766 | (3 0 5) | mf |
| 24,68 | 3,604 | (3 1 4) | mf |
| 25,81 | 3,449 | (2 2 5) | f |
| 26,49 | 3,362 | (2 1 5) | f |

Les zéolithes obtenues selon l'invention conviennent comme adsorbant pour effectuer l'adsorption sélective de molécules dont les dimensions sont inférieures à 0,8 nm ou encore, après avoir été soumises à des réactions d'échange avec des cations divers, comme catalyseurs ou composantes de catalyseurs utilisables dans les réactions de conversion catalytique de composés organiques et notamment de composés hydrocarbonés. Par exemple, par traitement d'échange avec des cations ammonium suivi d'une calcination on obtient la forme protonée de la zéolithe. Cette forme ainsi que celles résultant d'un traitement d'échange avec des cations des terres rares comme le lanthane sont appropriées comme catalyseurs acides pour l'hydrocraquage des charges pétrolières. Ces zéolithes peuvent être également soumises à des traitements d'échange avec des cations de métaux des groupes II à VIII de la Classification Périodique pour former des produits appropriés comme catalyseurs de conversion des hydrocarbures. Pour leurs applications en tant que catalyseurs, les zéolithes modifiées par échange avec des cations leur conférant des propriétés catalytiques peuvent être utilisées seules ou sous la forme de produits composites résultant du mélange desdites zéolithes modifiées avec d'autres produits catalytiquement actifs et/ou avec une matrice amorphe telle qu'un gel de silice ou encore un gel mixte de silice et d'un autre oxyde tel magnésie, alumine, oxyde de titane, oxyde de zirconium, ladite matrice servant à conférer, entre autres, une meilleures stabilité thermique au catalyseur.
Les catalyseurs composites associant une ou plusieurs zéolithes catalytiquement actives à une matrice à base de gel de silice ou de gel mixte de silice et d'un autre oxyde sont particulièrement appropriés pour les opérations en lit mobile ou en lit fluidisé car ils peuvent être façonnés aisément, par exemple par séchage par pulvérisation d'une suspension aqueuse des ingrédients les composant, en grains ayant les dimensions requises pour ces opérations.

Les exemples suivants sont donnés à titre non limitatif pour illustrer l'invention.

Dans ces exemples, les quantités et pourcentages sont donnés en poids sauf indication contraire.

EXEMPLE 1 :

Synthèse d'un polytype hexagonal de la faujasite

On préparait tout d'abord un gel d'aluminosilicate en opérant comme suit dans un récipient de capacité appropriée, le contenu dudit récipient étant maintenu sous agitation pendant toute la durée de l'opération. Dans le récipient on introduisait 9 parties d'eau, puis 0,75 partie de soude NaOH et, après dissolution de la soude, 1,45 partie d'éther couronne "18 crown 6". Après dissolution totale de l'éther couronne, on ajoutait alors au contenu du récipient 1 partie d'un aluminate de sodium renfermant 56 % d'$Al_2O_3$ et 37 % de $Na_2O$ et chauffait légèrement le mélange réactionnel pour dissoudre complètement l'aluminate. Après retour à température ambiante, on introduisait alors dans le récipient 8,2 parties d'une suspension colloidale de silice renfermant 40 % de $SiO_2$ et 60 % d'eau.

On obtenait ainsi un gel d'aluminosilicate dont la composition molaire, rapportée à une mole d'$Al_2O_3$, était la suivante :

10 $SiO_2$ ; 1 $Al_2O_3$ ; 2,8 $Na_2O$ ;1 éther couronne; 140 $H_2O$.

Le gel obtenu était soumis à un murissement à température ambiante pendant 48 heures dans un récipient fermé.

Le gel muri était ensuite placé dans un autoclave et maintenu à 110°C dans ce dernier pendant 96 heures pour former un produit cristallisé. Les cristaux formés étaient séparés du milieu réactionnel par filtration, puis lavés à l'eau distillée jusqu'à faible basicité (pH inférieur à 9) des eaux de lavage et enfin séchés à environ 60°C dans une étuve.

Les cristaux séchés étaient ensuite calcinés à 600°C pendant 4 heures afin d'éliminer les molécules de l'éther couronne utilisé comme agent structurant et d'obtenir la zéolithe.

Avant calcination, le produit cristallisé présente un diagramme de diffraction des rayons X comparable à celui donné dans le tableau II.

La formule trouvée pour ledit produit, ramenée à une maille de la structure qui est de symétrie hexagonale, s'écrit : 21 $Na^+$ $((SiO_2)_{75,6}\ (AlO_2)_{20,4})^{20,4-}$ 4("18 crown 6")67$H_2O$.

La zéolithe formée par calcination du produit ci-dessus présente un diagramme de diffraction des rayons X comparable à celui du tableau I caractéristique des polytypes hexagonaux calcinés de la faujasite.

La formule trouvée pour cette zéolithe, ramenée à une maille de la structure hexagonale, s'écrit à l'état anhydre :

21 $Na^+$ $((SiO_2)_{75,6}\ (AlO_2)_{20,4})^{20,4-}$

On observe un très léger excès de charge positive par rapport à la neutralité.

On retrouve dans la charpente de la zéolithe environ 80 % de la silice engagée dans l'opération.

EXEMPLE 2 :

Synthèse d'un polytype hexagonal de la faujasite

On opérait comme indiqué dans l'exemple 1 avec toutefois les variations suivantes des conditions opératoires :

| | |
|---|---|
| . préparation du gel | 0,48 partie de soude et 0,7 partie d'éther couronne "18 crown 6" |
| . murissement | 24 heures à 20°C |
| . cristallisation | 110°C pendant 144 heures |
| . calcination | 400°C pendant 6 heures |

Le gel d'aluminosilicate, avant murissement, avait la composition molaire suivante rapportée à 1 mole d'$Al_2O_3$ : 10 $SiO_2$ ; 1 $Al_2O_3$ ; 2,2 $Na_2O$ ; 0,5 éther couronne; 140 $H_2O$

Avant calcination, le produit cristallisé présente un diagramme de diffraction des rayons X comparable à celui donné dans le tableau II.

La formule trouvée pour ledit produit, ramenée à une maille de la structure qui est de symétrie hexagonale, s'écrit : 19 $Na^+$ $((SiO_2)_{77,2}\ (AlO_2)_{18,8})^{18,8-}$ 3,9("18 crown 6")66$H_2O$

La zéolithe formée par calcination du produit ci-dessus présente un diagramme de diffraction des rayons X comparable à celui du tableau I caractéristique des polytypes hexagonaux calcinés de la faujasite.

La formule trouvée pour cette zéolithe, ramenée à une maille de la structure hexagonale, s'écrit à l'état anhydre :

19 $Na^+$ $((SiO_2)_{77,2}\ (AlO_2)_{18,8})^{18,8-}$

On retrouve dans la charpente de la zéolithe environ 80 % de la silice engagée dans l'opération.

EXEMPLE 3 :

Synthèse d'un polytype hexagonal de la faujasite

On opérait comme indiqué dans l'exemple 1 avec toutefois les variations suivantes des conditions opératoires :

| | |
|---|---|
| . préparation du gel | 0,57 partie de soude, 1 partie d'éther couronne "18 crown 6" et 0,25 partie d'un acétate de cobalt renfermant 24% de cobalt et 29% d'eau, l'acétate étant ajouté après dissolution de l'éther couronne et avant addition de l'aluminate. |
| . murissement | 24 heures à température ambiante |
| . cristallisation | 110°C pendant 144 heures |
| . calcination | 600°C pendant 6 heures. |

Le gel d'aluminosilicate, avant murissement, avait la composition molaire suivante rapportée à 1 mole d'$Al_2O_3$ : 10 $SiO_2$; 1 $Al_2O_3$; 2,4 $Na_2O$; 0,7 éther couronne;0,1 CoO;140 $H_2O$.

Avant calcination, le produit cristallisé présente un diagramme de diffraction des rayons X comparable à celui donné dans le tableau II.

La formule trouvée pour ledit produit, ramenée à une maille de la structure qui est de symétrie hexagonale, s'écrit :

$$\begin{bmatrix} 18\ Na^{+} \\ \varepsilon\ Co^{++} \end{bmatrix} ((SiO_2)_{78,5}\ (AlO_2)_{17,5})^{17,7-}\ 3,7(\text{"18 crown 6"})70H_2O$$

avec dans cette formule $\varepsilon < 0,1$.

La zéolithe formée par calcination du produit précurseur ci-dessus présente un diagramme de diffraction des rayons X comparable à celui donné dans le tableau I caractéristique des polytypes hexagonaux calcinés de la faujasite.

La formule déterminée pour cette zéolithe, ramenée à une maille de la structure hexagonale, s'écrit à l'état anhydre :

$$\begin{bmatrix} 18Na^{+} \\ \varepsilon\ Co^{++} \end{bmatrix} ((SiO_2)_{78,5}\ (AlO_2)_{17,5})^{17,5-}$$

avec dans cette formule $\varepsilon < 0,1$.

On retrouve dans la charpente de la zéolithe environ 90% de la silice engagée dans l'opération.

EXEMPLE 4 :

Synthèse d'un polytype hexagonal de la faujasite

On opérait comme indiqué pour l'exemple 3 en remplaçant toutefois l'acétate de cobalt par 0,2 partie de nitrate d'argent et en mettant en oeuvre la calcination du précurseur de la zéolithe à 400°C pendant 6 heures.

Le gel d'aluminosilicate, avant murissement, avait la composition molaire suivante rapportée à 1 mole d'$Al_2O_3$ : 10 $SiO_2$;1$Al_2O_3$; 2,4 $Na_2O$;0,5 éther couronne;0,1$Ag_2O$;140$H_2O$

Avant calcination, le produit cristallisé présente un diagramme de diffraction des rayons X comparable à celui donné dans le tableau II.

La formule déterminée pour ledit produit, ramenée à une maille de la structure qui est de symétrie hexagonale, s'écrit

$$\begin{bmatrix} 18Na^{+} \\ \varepsilon Ag^{+} \end{bmatrix}((SiO_2)_{78,5}\ (AlO_2)_{17,5})^{17,5-}\ 3,7\ ("18\ crown\ 6")70H_2O$$

avec dans cette formule $\varepsilon<0,1$.

La zéolithe formée par calcination du produit précurseur ci-dessus présente un diagramme de diffraction des rayons X comparable à celui donné dans le tableau I caractéristique des polytypes hexagonaux calcinés dans la faujasite.

La formule déterminée pour cette zéolithe, ramenée à une maille de la structure hexagonale, s'écrit à l'état anhydre :

$$\begin{bmatrix} 18Na^{+} \\ \varepsilon Ag^{+} \end{bmatrix}\ ((SiO_2)_{78,5}\ (AlO_2)_{17,5})^{17,5-}$$

avec dans cette formule $\varepsilon<\overline{0},1$. On retrouve dans la charpente de la zéolithe environ 90 % de la silice engagée dans l'opération.

EXEMPLE 5 :

Synthèse d'un polytype hexagonal de la faujasite.

On opérait comme indiqué dans l'exemple 1 avec toutefois les variations suivantes dans les conditions opératoires :

| | |
|---|---|
| . préparation du gel | 0,84 partie de soude, 1 partie d'éther couronne "18 crown 6" et 9,9 parties de la suspension de silice |
| . murissement | 24 heures à température ambiante sous agitation |
| . cristallisation | 15 jours à 115°C. |

Le gel d'aluminosilicate, avant murissement, avait la composition molaire suivante rapportée à 1 mole d'$Al_2O_3$ :
12 $SiO_2$; 1 $Al_2O_3$; 3,8 $Na_2O$; 0,7 éther couronne; 140 $H_2O$

Le produit cristallisé se présentait sous la forme de cristaux plus ou moins sphériques ayant 10 à 13 µm de diamètre.

Avant calcination, le produit cristallisé présente un diagramme de diffraction des rayons X comparable à celui donné dans le tableau II.

La formule trouvée pour ledit produit, ramenée à une maille de la structure qui est de symétrie hexagonale, s'écrit :
19 $Na^+$ $((SiO_2)_{77,6}\ (AlO_2)_{18,4})^{18,4-}$4,1("18 crown 6")68 $H_2O$

La zéolithe formée par calcination du produit ci-dessus présente un diagramme de diffraction des rayons X comparable à celui du tableau I caractéristique des polytypes hexagonaux calcinés de la faujasite.

La formule trouvée pour cette zéolithe, ramenée à une maille de la structure hexagonale, s'écrit à l'état anhydre
19 $Na^+$ $((SiO_2)_{77,6}\ (AlO_2)_{18,4})^{18,4-}$

On retrouve dans la charpente de la zéolithe, dont le rapport Si:Al est d'environ 4,3, 85% environ de la silice engagée dans l'opération.

EXEMPLE 6 :

Synthèse d'un polytype hexagonal de la faujasite avec utilisation de germes de cristallisation

On préparait un gel d'aluminosilicate en opérant comme indiqué dans l'exemple 1, mais en utilisant 0,48 partie de soude et 1 partie de l'éther couronne"18crown 6"

Le gel obtenu avait la composition molaire suivante rapportée à 1 mole d'$Al_2O_3$ :
10 $SiO_2$; 1 $Al_2O_3$; 2,2 $Na_2O$; 0,7 éther couronne; 140 $H_2O$

Le gel précité était soumis à un murissement pendant 5 heures à 25°C.

Par ailleurs, on préparait des germes en broyant finement des cristaux du polytype hexagonal calciné obtenu dans l'exemple 1. On ajoutait ensuite au gel muri 0,2 partie des germes obtenus additionnés de 0,3 partie de soude.

Le mélange ainsi réalisé était alors maintenu dans un autoclave porté à 115°C pendant une période de 55 heures aux fins de cristallisation.

Les cristaux obtenus étaient séparés du milieu réactionnel, puis lavés, séchés et calcinés comme indiqué dans l'exemple 1.

Avant calcination, le produit cristallisé présente un diagramme de diffraction des rayons X comparable à celui donné dans le tableau II.

La formule trouvée pour ledit produit, ramenée à une maille de la structure qui est de symétrie hexagonale, s'écrit : $19\ Na^+((SiO_2)_{77,3}(AlO_2)_{18,7})^{18,7-}3,9(\text{"18 crown 6"})\ 67\ H_2O$.

La zéolithe formée par calcination du produit ci-dessus présente un diagramme de diffraction des rayons X comparable à celui donné dans le tableau I caractéristique des polytypes hexagonaux calcinés de la faujasite.

On retrouve dans la charpente de la zéolithe environ 90% de la silice engagée dans l'opération.

## Revendications

1. Zéolithe consistant en un aluminosilicate polytype hexagonal de la faujasite, ladite zéolithe ayant un rapport Si:Al supérieur à 1, possédant une structure cristalline de symétrie hexagonale avec des paramètres a, b et c de la maille hexagonale tels que 1,72 nm<a=b<1,77nm et 2,80 nm<c<2,89nm et présentant un diagramme de diffraction des rayons X, après calcination à 600°C pendant 4 heures, comparable à celui donné dans le tableau I ci-après :

TABLEAU I

| 2θ (°) | $d_{hkl}$ ($10^{-1}$nM) | (h k l) | I/Io |
|---|---|---|---|
| 5,88 | 15,03 ± 0,2 | (1 0 0) | FF |
| 6,23 | 14,2 | (0 0 2) | FF |
| 6,66 | 13,3 | (1 0 1) | F |
| 8,40 | 10,52 | (1 0 2) | f |
| 10,19 | 8,68 ± 0,08 | (1 1 0) | F |
| 11,06 | 7,99 | (1 0 3) | mF |
| 11,78 | 7,51 | (2 0 0) | mF |
| 11,95 | 7,40 | (1 1 2) | mF |
| 13,49 | 6,56 | (2 0 2) | ff |
| 15,06 | 5,88 ± 0,05 | (2 0 3) | f |
| 15,58 | 5,68 | (0 0 5) | F |
| 15,89 | 5,57 | (2 1 1) | f |
| 16,73 | 5,29 | (1 0 5) | f |
| 17,18 | 5,16 | (2 0 4) | F |
| 18,22 | 4,87 | (2 1 3) | f |
| 18,79 | 4,72 | (1 1 5) | f |
| 19,67 | 4,51 | (1 0 6) | f |
| 20,45 | 4,34 | (2 2 0) | mF |
| 22,22 | 4,00 | (3 1 2) | f |
| 22,75 | 3,91 | (1 0 7) | f |
| 23,30 | 3,82 | (3 1 3) | f |
| 23,66 | 3,76 | (3 0 5) | F |
| 24,75 | 3,59 | (3 1 4) | f |
| 25,83 | 3,45 | (2 2 5) | f |
| 26,52 | 3,36 | (2 1 5) | f |
| 27,16 | 3,28 | (4 1 0) | f |
| 28,77 | 3,103 ± 0,008 | (3 2 4) | f |
| 30,38 | 2,942 | (4 0 6) | ff |
| 30,89 | 2,894 | (3 3 0) | f |
| 31,20 | 2,866 | (5 0 3) | f |
| 31,56 | 2,834 | (3 3 2) | ff |

**2.** Zéolithe selon la revendication 1, caractérisée en ce qu'elle présente un rapport Si:Al dépassant 3.

**3.** Zéolithe selon la revendication 1 ou 2, caractérisée en ce qu'elle répond à la formule suivante, ramenée à une maille hexagonale de la structure cristalline :
$(u\ M_1^{q+})\ (r\ M^{n+})\ [(SiO_2)_{96-y}\ (AlO_2)_y]^{y-}\ (t\ H_2O)$
avec dans cette formule $M_1^{q+}$ désignant un cation q-valent d'un métal du groupe IA de la Classification Périodique des Eléments (q=1) ou d'un métal alcalino-terreux choisi parmi Ca, Sr et Ba (q=2) ou un cation monovalent renfermant de l'azote (q=1), notamment ammonium ou ammonium quaternaire, $M^{n+}$ représentant un cation métallique

de valence n autre qu'un cation $M_1^{q+}$, y, t, u et r étant des nombres tel que $15 \leq y \leq 48$, $t \geq 0$ selon l'état d'hydratation de la zéolithe (t=0 pour une zéolithe complètement anhydre), $O < u \leq \frac{y}{q}$ et $0 \leq r \leq \frac{y}{n}$ avec $qu + rn \geq y$.

4. Zéolithe selon la revendication 3, caractérisée en ce que le rapport Si:Al va de 3,7 à 4,5.

5. Zéolithe selon la revendication 3, caractérisée en ce que le nombre y dans la formule va de 17,5 à 20,4.

6. Zèolithe selon l'une des revendications 1 à 5, caractérisée en ce qu'elle se présente sous la forme aluminosilicate de sodium.

## Claims

1. Zeolite consisting of an aluminosilicate which is a hexagonal polytype of faujasite, the zeolite having an Si:Al ratio higher than 1, having a crystalline structure of hexagonal symmetry with parameters a, b and c of the hexagonal mesh such that 1.72 nm<a=b<1.77 nm and 2.80 nm<c<2.89 nm and having an X-ray diffraction pattern, after calcination at 600°C for 4 hours, comparable to that given in Table I below:

TABLE I

| 2θ (°) | $d_{hkl}$ ($10^{-1}$nM) | (h k l) | I/Io |
|---|---|---|---|
| 5,88 | 15,03 ± 0,2 | (1 0 0) | FF |
| 6,23 | 14,2 | (0 0 2) | FF |
| 6,66 | 13,3 | (1 0 1) | F |
| 8,40 | 10,52 | (1 0 2) | f |
| 10,19 | 8,68 ± 0,08 | (1 1 0) | F |
| 11,06 | 7,99 | (1 0 3) | mF |
| 11,78 | 7,51 | (2 0 0) | mF |
| 11,95 | 7,40 | (1 1 2) | mF |
| 13,49 | 6,56 | (2 0 2) | ff |
| 15,06 | 5,88 ± 0,05 | (2 0 3) | f |
| 15,58 | 5,68 | (0 0 5) | F |
| 15,89 | 5,57 | (2 1 1) | f |
| 16,73 | 5,29 | (1 0 5) | f |
| 17,18 | 5,16 | (2 0 4) | F |
| 18,22 | 4,87 | (2 1 3) | f |
| 18,79 | 4,72 | (1 1 5) | f |
| 19,67 | 4,51 | (1 0 6) | f |
| 20,45 | 4,34 | (2 2 0) | mF |
| 22,22 | 4,00 | (3 1 2) | f |
| 22,75 | 3,91 | (1 0 7) | f |
| 23,30 | 3,82 | (3 1 3) | f |
| 23,66 | 3,76 | (3 0 5) | F |
| 24,75 | 3,59 | (3 1 4) | f |
| 25,83 | 3,45 | (2 2 5) | f |
| 26,52 | 3,36 | (2 1 5) | f |
| 27,16 | 3,28 | (4 1 0) | f |
| 28,77 | 3,103 ± 0,008 | (3 2 4) | f |
| 30,38 | 2,942 | (4 0 6) | ff |
| 30,89 | 2,894 | (3 3 0) | f |
| 31,20 | 2,866 | (5 0 3) | f |
| 31,56 | 2,834 | (3 3 2) | ff |

**2.** Zeolite according to Claim 1, characterised in that it has an Si:Al ratio exceeding 3.

**3.** Zeolite according to Claim 1 or 2, characterised in that it corresponds to the following formula, based on one hexagonal mesh of the crystalline structure:

$$(u\,M_1^{q+})\,(r\,M^{n+})\,[(SiO_2)_{96-y}\,(AlO_2)_y]^{y-}\,(t\,H_2O)$$

in which formula $M_1^{q+}$ represents a q-valent cation of a metal of group IA of the Periodic Table of Elements (q=1) or of an alkaline earth metal selected from Ca, Sr and Ba (q=2) or a monovalent cation containing nitrogen (q=1), especially ammonium or quaternary ammonium, $M^{n+}$ represents a metal cation of valency n other than a $M_1^{q+}$ cat-

ion, y, t, u and r are numbers such that $15 \leq y \leq 48$, $t \geq 0$ according to the state of hydration of the zeolite (t=0 in the case of a completely anhydrous zeolite), $0 < u \leq \frac{y}{q}$ and $0 \leq r \leq \frac{y}{n}$, with $qu + rn \geq y$ .

4. Zeolite according to Claim 3, characterised in that the Si:Al ratio is from 3.7 to 4.5.

5. Zeolite according to Claim 3, characterised in that the number y in the formula is from 17.5 to 20.4.

6. Zeolite according to any one of Claims 1 to 5, characterised in that it is in the form of sodium aluminosilicate.

## Patentansprüche

1. Aus einem hexagonalen Polytypalumosilikat des Faujasits bestehender Zeolith mit einem Verhältnis Si:Al größer als 1, der eine Kristallstruktur der hexagonalen Symmetrie mit den Parametern a, b und c der hexagonalen Elementarzelle besitzt, wobei 1,72 nm < a=b < 1,77 nm und 2,80 nm < c < 2,89 nm gilt, und der nach Glühen bei 600°C während vier Stunden ein Röntgenbeugungsdiagramm aufweist, das mit dem in der folgenden Tabelle I vergleichbar ist:

TABELLE I

| 2Θ (°) | $d_{hkl}$ ($10^{-1}$nm) | (hkl) | I/Io |
|---|---|---|---|
| 5,88 | 15,03±0,2 | (1 0 0) | FF |
| 6,23 | 14,2 | (0 0 2) | FF |
| 6,66 | 13,3 | (1 0 1) | F |
| 8,40 | 10,52 | (1 0 2) | f |
| 10,19 | 8,68±0,08 | (1 1 0) | F |
| 11,06 | 7,99 | (1 0 3) | mF |
| 11,78 | 7,51 | (2 0 0) | mF |
| 11,95 | 7,40 | (1 1 2) | mF |
| 13,49 | 6,56 | (2 0 2) | ff |
| 15,06 | 5,88±0,05 | (2 0 3) | f |
| 15,58 | 5,68 | (0 0 5) | F |
| 15,89 | 5,57 | (2 1 1) | f |
| 16,73 | 5,29 | (1 0 5) | f |
| 17,18 | 5,16 | (2 0 4) | F |
| 18,22 | 4,87 | (2 1 3) | f |
| 18,79 | 4,72 | (1 1 5) | f |
| 19,67 | 4,51 | (1 0 6) | f |
| 20,45 | 4,34 | (2 2 0) | mF |
| 22,22 | 4,00 | (3 1 2) | f |
| 22,75 | 3,91 | (1 0 7) | f |
| 23,30 | 3,82 | (3 1 3) | f |
| 23,66 | 3,76 | (3 0 5) | F |
| 24,75 | 3,59 | (3 1 4) | f |
| 25,83 | 3,45 | (2 2 5) | f |
| 26,52 | 3,36 | (2 1 5) | f |
| 27,16 | 3,28 | (4 1 0) | f |
| 28,77 | 3,103±0,008 | (3 2 4) | f |
| 30,38 | 2,942 | (4 0 6) | ff |
| 30,89 | 2,894 | (3 3 0) | f |
| 31,20 | 2,866 | (5 0 3) | f |
| 31,56 | 2,834 | (3 3 2) | ff |

2. Zeolith nach Anspruch 1, dadurch **gekennzeichnet**, daß er ein Verhältnis Si:Al von über 3 aufweist.

3. Zeolith nach einem der Anprüche 1 oder 2, dadurch **gekennzeichnet**, daß er der folgenden, auf die hexagonale Elementarzelle der Kristallstruktur zurückgeführten Formel entspricht:
$(u\ M_1^{q+})\ (r\ M^{n+})\ [(SiO_2)_{96-y}\ (AlO_2)_y]^{y-}\ (tH_2O)$
worin $M_1^{q+}$ ein q-wertiges Kation eines Metalls der Gruppe IA des Periodensystems (q=1) oder eines Erdalkalimetalls, ausgewählt aus Ca, Sr und Ba (q=2), oder ein einwertiges Stickstoff enthaltendes Kation (q=1), insbesondere Ammonium oder quaternäres Ammonium, bezeichnet, $M^{n+}$ ein Metallkation mit der Wertigkeit n ist, das sich vom

Kation $M_1^{q+}$ unterscheidet, wobei y, t, u und r Zahlen wie $15 \leq y \leq 48$, $t \geq 0$, je nach dem Hydratisierungszustand des Zeoliths (t=0 bei einem vollständig wasserfreien Zeolith), $0 < u \leq y/q$ und $0 \leq r \leq y/n$ mit $qu+rn \geq y$ sind.

4. Zeolith nach Anspruch 3, dadurch **gekennzeichnet**, daß das Verhältnis Si:Al im Bereich von 3,7 bis 4,5 liegt.

5. Zeolith nach Anspruch 3, dadurch **gekennzeichnet**, daß die Zahl y in der Formel von 17,5 bis 20,4 liegt.

6. Zeolith nach einem der Ansprüche 1 bis 5, dadurch **gekennzeichnet**, daß er in Natriumalumosilikatform vorliegt.